# EUROPÄISCHE PATENTSCHRIFT

(11) **EP 2 243 442 B1**
(45) Veröffentlichungstag und Bekanntmachung des Hinweises auf die Patenterteilung: **08.01.2014**
(21) Anmeldenummer: 09005703.5
(22) Anmeldetag: 23.04.2009
(51) Int. Cl.: A61C 17/26, A61C 17/22

(54) **Elektrokleingerät mit einem Anzeigeelement**
Small electrical device with a display element
Petit appareil électrique doté d'un élément d'affichage

(43) Veröffentlichungstag der Anmeldung: 27.10.2010
(73) Patentinhaber: Braun GmbH, 61476 Kronberg (DE)
(72) Erfinder: Faranda, Leo, 63110 Rodgau (DE); Hilscher, Alexander, 61440 Oberursel (DE); Skopp, Frank Stefan, 65760 Eschborn (DE); Müller, Frank, 61440 Oberursel (DE); Schaefer, Norbert, 60320 Frankfurt/Main (DE)
(74) Vertreter: Schneider, Stefan Michael

(56) Entgegenhaltungen:
- EP-A- 0 389 784
- WO-A-2007/122491
- WO-A-2008/018804
- US-A1- 2004 049 123
- US-A1- 2008 313 829

## Beschreibung

Die Erfindung betrifft ein Elektrokleingerät, beispielsweise eine elektrische Zahnbürste oder einen elektrischen Rasierapparat, mit einem Anzeigeelement.

Aus der US 6,954,961 B2 ist eine elektrische Zahnbürste bekannt, die ein Anzeigeelement zur Warnung vor zu hohem Anpreßdruck der Zahnbürste beim Putzen aufweist. Überschreitet der Anpreßdruck einen gewissen Schwellwert, wird eine Warnleuchte aktiviert. Eine derartige Zahnbürste soll den Benutzern die Furcht vor zu aggressivem Putzen der Zähne und am Zahnfleischsaum nehmen und ihnen helfen, mit dem richtigen Anpreßdruck zu putzen.

Aus den Dokumenten US 2004/0049123 und US 2008/0313829 sind auch andere Zahnbürsten bekannt, die zumindest zwei verschiedene Funktionen aufweisen.

Allerdings kann ein Konsument nur schwer erkennen, ob eine elektrische Zahnbürste diese Funktion aufweist, wenn sich die Zahnbürste in der Verpackung befindet oder im Schaufenster steht. Daher wurden sogenannte Demo-Boards entwickelt, auf denen nebeneinander verschiedene Modelle von elektrischen Zahnbürsten (bestehend aus je einem Handstück, einer Ersatzbürste und einem Ladeteil) montiert sind, an denen er die Motorfunktion oder andere Funktionen testen kann. Dies soll ihm die Wahl des richtigen Modells erleichtern. Es ist ferner bekannt, für Demonstrationszwecke spezielle Elektrokleingeräte zu bauen, mit denen die Funktionen eines "normalen" Elektrokleingeräts veranschaulicht werden können.

Der Erfindung liegt die Aufgabe zugrunde, ein Elektrokleingerät anzugeben, dessen Funktionen für einen Benutzer leicht erkennbar sind.

Diese Aufgabe wird durch ein Elektrokleingerät gelöst, das ein von einem Benutzer betätigbares Schaltelement, ein Anzeigeelement und eine Steuereinheit zur Überwachung des Schaltelements und zur Steuerung des Anzeigeelements aufweist, und das sich in einem ersten und in einem zweiten Betriebszustand befinden kann, und dessen Anzeigeelement eine erste Funktion und eine zweite Funktion anzeigen kann, wobei die Steuereinheit das Anzeigeelement zum Anzeigen der ersten Funktion ansteuert, wenn sich das Elektrokleingerät im ersten Betriebszustand befindet und ausgeschaltet ist, und die Steuereinheit das Anzeigeelement zum Anzeigen der zweiten Funktion ansteuert, wenn sich das Elektrokleingerät im ersten Betriebszustand befindet und eingeschaltet ist.

Ein derartiges Elektrokleingerät kann in einen ersten Betriebszustand versetzt werden, in dem das Anzeigeelement zwei verschiedene Funktionen ausüben kann, beispielsweise eine Werbefunktion solange es ausgeschaltet ist, und eine Betriebsfunktion, wenn es von einem Benutzer eingeschaltet ist. Im zweiten Betriebszustand des Elektrokleingeräts ist vorzugsweise nur die Betriebsfunktion verfügbar.

Vorzugsweise ist die Steuereinheit auch zur Überwachung der Betriebsspannung des Elektrokleingeräts ausgelegt, und steuert das Anzeigeelement nur dann zum Anzeigen der ersten Funktion an, wenn die Betriebsspannung eine Mindestspannung übersteigt. Wenn das Elektrokleingerät ferner eine wiederaufladbare Batterie aufweist, ist die Steuereinheit vorzugsweise auch zur Überwachung eines Ladevorgangs ausgelegt, wobei die Steuereinheit das Anzeigeelement zum Anzeigen der ersten Funktion nur während eines Ladevorgangs und/oder innerhalb einer bestimmten Zeitspanne nach einem Ladevorgang ansteuert. Auf diese Weise wird eine Tiefentladung der wiederaufladbaren Batterie durch die erste Anzeigefunktion verhindert.

Die Werbefunktion besteht aus einem Blinken des Anzeigeelements, das beispielsweise für 0,2 bis 0,8 Sekunden eingeschaltet und danach für 1,6 bis 8 Sekunden ausgeschaltet ist. Der Faktor zwischen "Ein" und "Aus" sollte 2 bis 10, vorzugsweise 5, betragen, um die Batterie zu schonen und eine lange Laufzeit zu erhalten, wenn das Elektrokleingerät einmal nicht mit dem Ladeteil verbunden ist.

Das Elektrokleingerät kann beispielsweise dadurch in den ersten Betriebszustand versetzt werden, daß in einer bestimmten Reihenfolge und/oder Dauer das Schaltelement betätigt und das Elektrokleingerät mit einem Ladegerät für die wiederaufladbare Batterie verbunden bzw. von diesem wieder getrennt wird. Für eine derartige Aktivierung sind keine zusätzlichen Bedienelemente am Elektrokleingerät erforderlich.

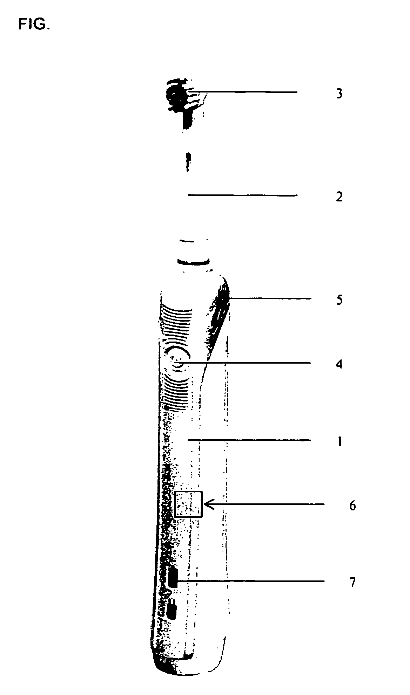

Die Erfindung wird nachstehend am Beispiel einer elektrischen Zahnbürste erläutert, die in der Figur dargestellt ist. Die Zahnbürste besteht aus einem Handstück 1 und einer Bürste 2, die in an sich bekannter Weise mit Borsten 3 versehen und mit dem Handstück verbunden ist. Das Handstück weist beispielsweise einen Taster als Schaltelement 4 und ein Anzeigeelement 5 auf. Im Handstück befindet sich ein Motor zum Antreiben der Bürste 2 und eine nur schematisch dargestellte Steuereinheit 6 zur Überwachung des Schaltelements 4 und zur Steuerung des Anzeigeelements 5, das beispielsweise aus einer Leuchtdiode besteht. Ferner befindet sich im Handstück eine vorzugsweise wiederaufladbare Batterie.

Die Zahnbürste kann sich in einem ersten und in einem zweiten Betriebszustand befinden. Im ersten Betriebszustand hat das Anzeigeelement eine erste Funktion, beispielsweise eine Werbefunktion, solange die Zahnbürste ausgeschaltet ist, d.h. die Steuereinheit läßt die Leuchtdiode blinken, um die Aufmerksamkeit der Kunden auf die Zahnbürste zu ziehen. Schaltet der Kunde nun die Zahnbürste mittels des Schaltelements 4 ein, wodurch beispielsweise der Motor der elektrischen Zahnbürste aktiviert wird, hat das Anzeigeelement eine zweite Funktion, nämlich eine Betriebsfunktion, d.h. dient beispielsweise zum Anzeigen eines zu hohen Anpreßdrucks beim Zähneputzen. Wird nämlich ein Benutzer die Bürste 2 belasten, indem er die Borsten 3 gegen die Zähne drückt oder versuchsweise mit den Fingern auf die Borsten 3 der Bürste 2 drückt, sorgt die Steuereinheit 6 dafür, daß die Leuchtdiode 5 immer dann leuchtet, wenn der Kunde einen zu hohen Druck auf die Bürste 2 ausübt. Zu diesem Zweck ist die Zahnbürste ferner mit einem Sensor für den auf die Bürste 2 ausgeübten Druck versehen, der ebenfalls mit der Steuereinheit 6 verbunden ist.

Wenn der Benutzer die Zahnbürste wieder ausschaltet, indem er beispielsweise erneut das Schaltelement 4 betätigt, wird das Anzeigeelement 5 wieder für seine erste Funktion verwendet, nämlich der Werbefunktion, um Kunden auf sich aufmerksam zu machen.

Befindet sich das Elektrokleingerät im zweiten Betriebszustand, hat das Anzeigeelement nur die Betriebsfunktion, d.h. bei eingeschalteter Zahnbürste leuchtet die Leuchtdiode, um ggfs. einen zu hohen Anpreßdruck anzuzeigen, wogegen sie bei ausgeschalteter Zahnbürste dunkel bleibt. Somit ist die Werbefunktion unabhängig von der Betätigung des Schaltelements 4 im zweiten Betriebszustand nicht aktiviert.

Wenn sich das Elektrokleingerät im ersten Betriebszustand befindet und ausgeschaltet ist, ist der Stromverbrauch der blinkenden Leuchtdiode möglicherweise so groß, daß die Batterie schnell leer wird. Eine Aktivierung der Werbefunktion über einen längeren Zeitraum ist daher nicht sinnvoll. Daher sorgt die Steuereinheit dafür, daß die Werbefunktion vorzugsweise nur dann aktiviert ist, wenn die Spannung der Batterie eine Mindestspannung übersteigt. Bei einem Elektrokleingerät mit einer wiederaufladbaren Batterie kann die Steuerschaltung auch so ausgebildet sein, daß sie feststellt, ob das Elektrokleingerät mit einem Ladeteil verbunden ist. Wenn die Steuereinheit in diesem Fall auch noch mit einer Zeiterfassungseinrichtung versehen ist, die die seit einem Trennen des Elektrokleingeräts vom Ladeteil verstrichene Zeit erfaßt, kann die Werbefunktion auch dann noch aktiviert sein, wenn das Elektrokleingerät für eine nicht zu lange Zeitspanne vom Ladeteil getrennt ist. Solange das Elektrokleingerät ausgeschaltet und mit dem Ladeteil verbunden bzw. die Batteriespannung genügend groß ist, wird also das Anzeigeelement in seiner ersten Funktion betrieben.

Vorzugsweise steuert die Steuereinheit auch das Aufladen der Batterie, und zwar derart, daß die Batterie immer voll ist, solange das Elektrokleingerät mit dem Ladeteil verbunden ist. Dies hat zur Folge, daß das Elektrokleingerät im ersten Betriebszustand bei aktivierter Werbefunktion stärker nachgeladen wird als im zweiten Betriebszustand ohne Werbefunktion.

Die Umschaltung des Elektrokleingeräts von seinem ersten Betriebszustand in seinen zweiten Betriebszustand oder umgekehrt erfolgt vorzugsweise so, daß ein versehentliches Umschalten weitgehend ausgeschlossen ist. Dem liegt die Überlegung zugrunde, daß üblicherweise die Werbefunktion des Elektrokleingeräts nur für den Handel von Bedeutung ist, die Kunden jedoch nur an der Betriebsfunktion interessiert sind. Das beschriebene Elektrokleingerät hat also den Vorteil, daß es sowohl als "Normal-Gerät" für die Kunden als auch als "Demonstrations-Gerät" für den Handel verwendbar ist.

Das Umschalten des Elektrokleingeräts von seinem ersten Betriebszustand in seinen zweiten Betriebszustand und umgekehrt wird nachfolgend anhand eines Beispiels beschrieben. Dabei wird vorausgesetzt, daß das Elektrokleingerät eine wiederaufladbare Batterie und eine Anzeige 7 für den Ladezustand der Batterie aufweist, beispielsweise eine weitere Leuchtdiode, wobei die Steuereinheit 6 dafür sorgt, daß die Ladeanzeige 7 für eine gewisse Zeit ununterbrochen leuchtet, nachdem das Elektrokleingerät mit dem Ladeteil verbunden wurde, und nach dieser gewissen Zeit zu blinken anfängt. Zum Umschalten des Betriebszustands des Elektrokleingeräts wird zuerst der Taster 4 gedrückt und während der folgenden Schritte gedrückt gehalten. Das Gerät wird dann mehrmals auf das Ladeteil gestellt und wieder von ihm getrennt, wobei das Trennen vom Ladegerät manchmal bereits dann erfolgt, wenn die Ladeanzeige 7 noch ununterbrochen leuchtet, und manchmal erst dann, wenn die Ladeanzeige 7 bereits zu blinken angefangen hat. Abschließend wird das Elektrokleingerät vom Ladeteil getrennt und der Taster 4 losgelassen.

Mit einer derartigen Prozedur ist mit hinreichender Sicherheit dafür gesorgt, daß ein Kunde das Umschalten von dem einen Betriebszustand in den anderen nicht versehentlich vornimmt. Weitere geeignete Prozeduren zum Überführen des Elektrokleingeräts von einem Betriebszustand in einen anderen sind in der EP 0 894 039 B1 beschrieben.

## Patentansprüche

1. Elektrokleingerät, beispielsweise elektrische Zahnbürste oder elektrischer Rasierapparat, mit einem von einem Benutzer betätigbaren Schaltelement (4), einem Anzeigeelement (5) und einer Steuereinheit (6) zur Überwachung des Schaltelements (4) und zur Steuerung des Anzeigeelements (5), wobei sich das Elektrokleingerät in einem ersten und in einem zweiten Betriebszustand befinden kann, und das Anzeigeelement (5) eine erste Funktion und eine zweite Funktion anzeigen kann, wobei die Steuereinheit (6) das Anzeigeelement (5) zum Anzeigen der ersten Funktion ansteuert, wenn sich das Elektrokleingerät im ersten Betriebszustand befindet und ausgeschaltet ist, und die Steuereinheit (6) das Anzeigeelement (5) zum Anzeigen der zweiten Funktion ansteuert, wenn sich das Elektrokleingerät im ersten Betriebszustand befindet und eingeschaltet ist, wobei im zweiten Betriebszustand die Steuereinheit (6) das Anzeigeelement (5) nur zum Anzeigen der zweiten Funktion ansteuert.

2. Elektrokleingerät nach Anspruch 1, wobei die Steuereinheit (6) zur Überwachung der Betriebsspannung des Elektrokleingeräts ausgelegt ist, und daß die Steuereinheit (6) das Anzeigeelement (5) nur dann zum Anzeigen der ersten Funktion ansteuert, wenn die Betriebsspannung eine Mindestspannung übersteigt.

3. Elektrokleingerät nach Anspruch 1, wobei es ferner eine wiederaufladbare Batterie aufweist, daß die Steuereinheit (6) zur Überwachung eines Ladevorgangs ausgelegt ist, und daß die Steuereinheit (6) das Anzeigeelement (5) zum Anzeigen der ersten Funktion nur während eines Ladevorgangs und/oder innerhalb einer bestimmten Zeitspanne nach einem Ladevorgang ansteuert.

4. Elektrokleingerät nach Anspruch 3, wobei es in den ersten Betriebszustand versetzbar ist, indem in einer bestimmten Reihenfolge das Schaltelement (4) betätigt und das Elektrokleingerät mit einem Ladegerät für die wiederaufladbare Batterie verbunden bzw. wieder vom Ladegerät getrennt wird.

5. Elektrokleingerät nach Anspruch 4, wobei es in den ersten Betriebszustand versetzbar ist, wenn die Betätigung des Schaltelements (4) und/oder das Verbinden/Trennen des Elektrokleingeräts mit/von dem Ladegerät mit einem bestimmten zeitlichen Ablauf erfolgt.

6. Elektrokleingerät nach Anspruch 4 oder 5, wobei es von dem ersten in den zweiten Betriebszustand auf dieselbe Weise versetzbar ist wie von dem zweiten in den ersten Betriebszustand.

7. Elektrokleingerät nach Anspruch 3, wobei es eine weitere Anzeige (7) für den Ladezustand der Batterie aufweist.

8. Elektrokleingerät nach einem der vorhergehenden Ansprüche, wobei das Elektrokleingerät eine elektrische Zahnbürste oder ein elektrischer Rasierapparat ist.

## Claims

1. A small electric appliance -- for example an electric toothbrush or an electric shaving apparatus -- having a switch element (4) that can be activated by a user, an indicator element (5), and a control unit (6) for monitoring the switch element (4) and for controlling the indicator element (5); wherein the small electric appliance can be in a first and in a second operating state, and the indicator element (5) can indicate a first function and a second function; wherein the control unit (6) activates the indicator element (5) to indicate the first function when the small electric appliance is in the first operating state and is switched off, and the control unit (6) activates the indicator element (5) to indicate the second function, when the small electric appliance is in the first operating state and is switched on; wherein, in the second operating state, the control unit (6) activates the indicator element (5) only to indicate the second function.

2. A small electric appliance in accordance with Claim 1, wherein the control unit (6) is designed for monitoring the operating voltage of the small electric appliance, and the control unit (6) only activates the indicator element (5) to indicate the first function when the operating voltage exceeds a minimum voltage.

3. A small electric appliance in accordance with Claim 1, wherein it also has a rechargeable battery, [characterized in] that the control unit (6) is designed for monitoring a charging process, and [in] that the control unit (6) activates the indicator element (5) to indicate the first function only during a charging process and/or within a certain period of time after a charging process.

4. A small electric appliance in accordance with Claim 3, wherein it is switchable to the first operating state in that the switch element (4) is actuated in a certain sequence and the small electric appliance is connected to a charging device for the rechargeable battery or is detached from the charging device again.

5. A small electric appliance in accordance with Claim 4, wherein it can be switched to the first operating state when the switch element (4) is actuated and/or the small electric appliance is connected to / detached from the charging device in a certain time sequence.

6. A small electric appliance in accordance with Claim 4 or 5, wherein it can be switched from the first operating state to the second operating state in the same manner as from the second operating state to the first operating state.

7. A small electric appliance in accordance with Claim 3, wherein it has an additional indicator (7) for the charge state of the battery.

8. A small electric appliance in accordance with one of the preceding Claims, wherein the small electric appliance is an electric toothbrush or an electric shaving apparatus.

## Revendications

1. Petit appareil électrique, par exemple brosse à dents électrique ou rasoir électrique, avec un élément de commutation (4) pouvant être actionné par un utilisateur, un élément d'affichage (5) et une unité de commande (6) pour surveiller l'élément de commutation (4) et commander l'élément d'affichage (5), dans lequel le petit appareil électrique peut se trouver dans un premier et dans un second mode de fonctionnement et l'élément d'affichage (5) peut afficher une première fonction et une seconde fonction, dans lequel l'unité de commande (6) commande l'élément d'affichage (5) pour qu'il affiche la première fonction lorsque le petit appareil électrique se trouve dans le premier mode de fonctionnement et qu'il est éteint et l'unité de commande (6) commande l'élément d'affichage (5) pour qu'il affiche la seconde fonction, lorsque le petit appareil électrique se trouve dans le premier mode de fonctionnement et qu'il est allumé, dans lequel, dans le second mode de fonctionnement, l'unité de commande (6) commande l'élément d'affichage (6) pour qu'il affiche uniquement la seconde fonction.

2. Petit appareil électrique selon la revendication 1, dans lequel l'unité de commande (6) est conçue pour surveiller la tension de service du petit appareil électrique et dans lequel l'unité de commande (6) commande l'élément d'affichage (5) pour n'afficher la première fonction que lorsque la tension de service dépasse la tension minimale

3. Petit appareil électrique selon la revendication 1, présentant en outre une batterie rechargeable, l'unité de commande (6) étant conçue pour la surveillance du processus de charge et dans lequel l'unité de commande (6) commande l'élément d'affichage (5) pour qu'il n'affiche la première fonction que pendant un processus de charge et/ou pendant une période de temps prédéfinie après un processus de charge.

4. Petit appareil électrique selon la revendication 3, pouvant être commuté dans le premier mode de fonctionnement lorsque, dans un ordre particulier, l'élément de commutation (4) est actionné et que le petit appareil électrique est raccordé à un appareil de chargement pour la batterie rechargeable ou de nouveau débranché de l'appareil de chargement.

5. Petit appareil électrique selon la revendication 4, pouvant être commuté dans le premier mode de fonctionnement, lorsque l'actionnement de l'élément de commutation (4) et/ou le raccordement/le débranchement du petit appareil électrique à/de l'appareil de chargement s'effectue selon un ordre temporel prédéfini.

6. Petit appareil électrique selon la revendication 4 ou 5, pouvant être commuté du premier au second mode de fonctionnement de la même manière que du second au premier mode de fonctionnement.

7. Petit appareil électrique selon la revendication 3, présentant un autre affichage (7) pour l'état de charge de la batterie.

8. Petit appareil électrique selon l'une des revendications précédentes, le petit appareil électrique étant une brosse à dents électrique ou un rasoir électrique.
